# EUROPÄISCHE PATENTSCHRIFT

(11) **EP 2 401 903 B1**
(45) Veröffentlichungstag und Bekanntmachung des Hinweises auf die Patenterteilung: **20.03.2013**
(21) Anmeldenummer: 11166655.8
(22) Anmeldetag: 19.05.2011
(51) Int. Cl.: A01C 19/04, F15B 15/28, A01C 19/00

(54) **Schalteinrichtung für eine landwirtschaftliche Verteilmaschine zum Ausbringen von Saatgut und/oder Dünger**
Switching device for an agricultural distribution machine for dispensing seeds and/or fertilizers
Dispositif de commutation pour une machine de répartition agricole destinée à sortir des semences et/ou de l'engrais

(30) Priorität: 02.07.2010 DE 102010025944
(43) Veröffentlichungstag der Anmeldung: 04.01.2012
(73) Patentinhaber: Kverneland A/S, 4355 Kvernaland (NO)
(72) Erfinder: Beier, Carsten, 33154, Salzkotten (DE)
(74) Vertreter: Schweiger, Johannes

(56) Entgegenhaltungen:
- EP-A1- 0 281 761
- EP-A2- 0 389 004
- DE-A1- 10 038 595
- DE-A1-102008 050 783
- DE-U1- 29 722 396
- US-A- 5 896 966

## Beschreibung

Die Erfindung betrifft eine Schalteinrichtung mit einem ersten Schaltzustand bei Verstellung einer Arbeitseinrichtung einer landwirtschaftlichen Verteilmaschine von einer ersten Stellung in eine zweite Stellung und mit einem zweiten Schaltzustand bei Rückstellung von der zweiten Stellung in die erste Stellung gemäß Patentanspruch 1. Weiterhin betrifft die vorliegende Erfindung eine Verteilmaschine zur Verteilung von Saatgut/Dünger gemäß Patentanspruch 9.

Für das Ein- oder Ausschalten elektrisch angetriebener Säaggregate oder Dosiergeräte, wofür der Gegenstand der vorliegenden Erfindung in erster Linie benötigt wird, wenn bei der Ausbringung von Saatgut/Dünger auf das Feld am Feldrand gewendet wird, existieren im Stand der Technik verschiedene Ansätze.

Die DE 297 22 396 U1 beschreibt einen Hydraulikzylinder mit einer Kulissenschaltung.

Die DE 10038595 A1 beschreibt einen Zylinden mit einer Schalteinrichtung für landwirtschaftlichen maschinen. Die DE 10 2008 050 783 A1 beschreibt eine gezogene Sämaschine mit einer durch eine Antriebsvorrichtung angetriebenen Dosiervorrichtung, wobei der Antriebsvorrichtung eine als einen Kolben aufweisende Hydraulikzylinder ausgebildete Abschalteinrichtung zur Unterbrechung des Antriebswellen aufweisenden Antriebes der Dosiervorrichtung zugeordnet ist.

Die europäische Patentschrift EP 0 650 660 B1 beschreibt die Ein- und Abschaltung der Saatgutausbringung mittels eines Spornrades verbunden mit dem Nachteil, dass das Ein- und Abschalten auf Grund der Trägheit des Systems zeitlich versetzt erfolgt, da das Saatgut erst mit Rotation des Spornrades zu den Säscharen befördert wird.

In der DE 10 2004 014 063 A9 wird eine Elektronik beschrieben, mit der eine Dosierungssteuerung ein- und ausgeschaltet werden kann. Zur Erkennung, ob sich die Verteilmaschine 1 in Arbeitsstellung A oder in Nichtarbeitsstellung N befindet, werden verschiedene Arten von Sensoren, beispielsweise Näherungsschalter 19, Drehwinkelsensor 17 oder Hubwegsensor 18 vorgeschlagen (siehe [0022] und [0023]). Der Lösungsansatz mit Näherungsschaltern 19 bringt als Nachteil lange Schaltwege mit sich und darüber hinaus wird auf Grund der Starrheit des Systems die Flexibilität eingeschränkt. Bei Änderung der Sätiefe beziehungsweise der Höhe des Aushubs müsste entsprechend auch die Lage der Näherungsschalter angepasst werden. Drehwinkelsensoren oder Hubwegsensoren sind kostenintensiv, insbesondere bei einem etwaigen Sensordefekt. Darüber hinaus setzen die vorgenannten Ansätze eine intelligente Steuerung, insbesondere eine Kommunikation mit dem Schlepper, voraus.

Aufgabe der vorliegenden Erfindung ist es, eine konstruktiv einfache, schlepperunabhängige und äußerst zuverlässige Schalteinrichtung sowie korrespondierende Verteilmaschine anzugeben.

Diese Aufgabe wird mit den Merkmalen der Ansprüche 1 und 9 gelöst. Vorteilhafte Weiterbildungen der Erfindung sind in den Unteransprüchen angegeben. In den Rahmen der Erfindung fallen auch sämtliche Kombinationen aus zumindest zwei der in der Beschreibung, in den Ansprüchen und/oder den Zeichnungen angegebenen Merkmale. Bei angegebenen Wertebereichen sollen auch innerhalb der genannten Grenzen liegende Werte als Grenzwerte offenbart gelten und in beliebiger Kombination beanspruchbar sein.

Der Erfindung liegt der Gedanke zugrunde, statt einer aufwendigen Weg-oder Winkelmessung Schaltmittel vorzusehen, die zur Erfassung des ersten und zweiten Schaltzustands gemäß Patentanspruch 1 dienen. Somit kann auf eine aufwendige Erfassung der gesamten Bewegung der Arbeitseinrichtung beim Ein- und Ausklappen beziehungsweise Verstellen von einer ersten Stellung in eine zweite Stellung, insbesondere von einer Vorgewendestellung in eine Arbeitsstellung verzichtet werden. Der Vorteil von Schaltmitteln liegt nicht nur in der kostengünstigeren Herstellung, sondern auch in der zuverlässigeren Arbeitsweise. Die Schalteinrichtung ist insbesondere als Vorgewendeschalteinrichtung ausgebildet.

Gemäß einer vorteilhaften Ausführungsform der Erfindung ist vorgesehen, dass durch die Schaltmittel, insbesondere mittels eines, vorzugsweise genau eines einzigen, am ersten Schaltglied angebrachten Betätigungsmittels, insbesondere Schalters, vorzugsweise Tasters, eine Relativbewegung des ersten Schaltglieds gegenüber dem zweiten Schaltglied nach einer Richtungsänderung erfassbar ist. Mit der Erfassung der Relativbewegung ist nicht etwa gemeint, dass der Weg oder die Bewegung als solche, beispielsweise die Geschwindigkeit, erfasst wird, sondern vielmehr ein Zustand beziehungsweise die Zustandsänderung, die als erster beziehungsweise zweiter Schaltzustand der Schalteinrichtung erfassbar sind. Die erfindungsgemäße Schalteinrichtung ist demnach darauf beschränkt, eine durch die Richtungsänderung der Relativbewegung des ersten Schaltgliedes gegenüber dem zweiten Schaltglied bewirkte Betätigung des Schaltmittels, insbesondere Betätigungsmittels zu erfassen.

Gemäß einer weiteren vorteilhaften Ausführungsform der Erfindung ist vorgesehen, dass das erste Schaltglied entlang des zweiten Schaltglieds durch die Schaltmittel, insbesondere mittels eines Gleiters, vorzugsweise einer das zweite Schaltglied zumindest teilweise, insbesondere reibschlüssig, umschließenden Schalthülse, geführt ist. Auf diese Weise kann mit Vorteil auf mechanische Bauteile wie Getriebe, Zahnräder oder sonstige rotierende Bauteile bei den Schaltmitteln gemäß der vorliegenden Erfindung verzichtet werden.

Soweit durch die Schaltmittel, insbesondere durch das Betätigungsmittel, vorzugsweise den Schalter, die Relativbewegung der Schalthülse gegenüber dem ersten Schaltglied nach einer Richtungsänderung erfassbar ist, können mit Vorteil besonders einfache und zuverlässige Schalter wie Näherungsschalter beziehungsweise -taster vorgesehen werden. Ein weiterer Vorteil liegt darin, dass durch die zusätzliche Schalthülse und die lineare beziehungsweise translatorische Bewegung der Schaltglieder ein einziger Schalter zur Erfassung der Schaltzustände ausreicht.

Durch die erfindungsgemäße Maßnahme, dass am ersten Schaltglied zwei die Bewegung der Schalthülse mit dem zweiten Schaltglied begrenzende Anschläge, insbesondere gebildet durch ein, vorzugsweise in einem Schaltblech vorgesehenes, Langloch, angebracht sind, wird die Erfindung vorteilhaft weitergebildet.

Dabei ist es weiterhin von Vorteil, wenn die Schalthülse einen mit den Anschlägen, insbesondere dem Langloch, zusammenwirkenden Fortsatz, insbesondere in Form eines Stiftes, aufweist. Auf diese Weise wird eine konstruktiv einfache und zuverlässige Ermittlung der Schaltzustände ermöglicht.

Gemäß einer weiteren, vorteilhaften Ausführungsform der Erfindung ist vorgesehen, dass ein Fortsatz oder der oben beschriebene Fortsatz zur Erfassung der Bewegung der Schalthülse durch den Schalter vorgesehen ist.

Besonders vorteilhaft ist es gemäß einer Ausführungsform der Erfindung, wenn das erste Schaltglied ein Zylinderrohr eines Stellzylinders zur Verstellung der Verteilmaschine zwischen der Arbeitsstellung und der Vorgewendestellung ist oder das erste Schaltglied an diesem angebracht ist. Zusätzlich oder alternativ hierzu ist es außerdem von Vorteil, wenn das zweite Schaltglied eine Kolbenstange des Stellzylinders ist oder an dieser in Richtung der Längsachse des zweiten Schaltglieds ohne translatorischen Freiheitsgrad gekoppelt ist. Auf diese Weise ist die Schalteinrichtung platzsparend und auf konstruktiv einfache Art und Weise sowie unter Ausnutzung von Synergieeffekten zumindest teilweise in für den Betrieb der Verteilmaschine notwendige Stellzylinder integrierbar. Als Stellzylinder kommen insbesondere pneumatische, elektrische, besonders bevorzugt aber hydraulische Zylinder in Frage.

Die Verteilmaschine gemäß der vorliegenden Erfindung kann verbessert werden, indem die Schalteinrichtung an der Arbeitseinrichtung angeordnet ist, wobei die Arbeitseinrichtung eine Sämaschine oder ein Spuranreißer sein kann.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1: eine schematische Seitenansicht auf eine erfindungsgemäße Verteilmaschine mit einer erfindungsgemäßen Schalteinrichtung in einer ersten Stellung,
- Fig. 2: eine perspektivische Ansicht der erfindungsgemäßen Schalteinrichtung in der ersten Stellung,
- Fig. 3: eine perspektivische Ansicht der Schalteinrichtung gemäß Figur 2 in einer zweiten Stellung,
- Fig. 4: eine Detailansicht erfindungsgemäßer Schaltmittel gemäß der Ausführungsform aus Figur 2 und 3,
- Fig. 5: eine schematische Seitenansicht einer weiteren Ausführungsform der erfindungsgemäßen Schalteinrichtung in einer ersten Stellung,

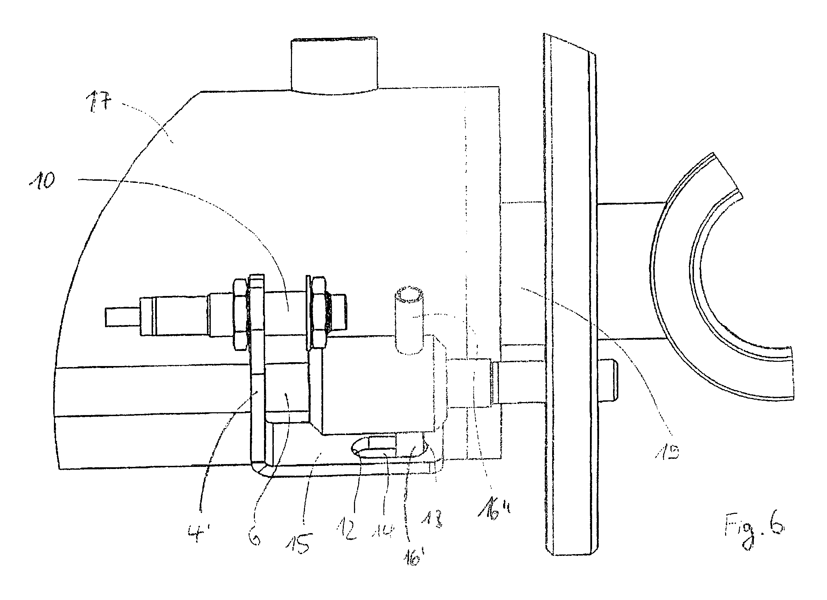

- Fig. 6: eine Seitenansicht der Schalteinrichtung gemäß Figur 5 bei Belegungsbeginn von der ersten Stellung in die zweite Stellung,

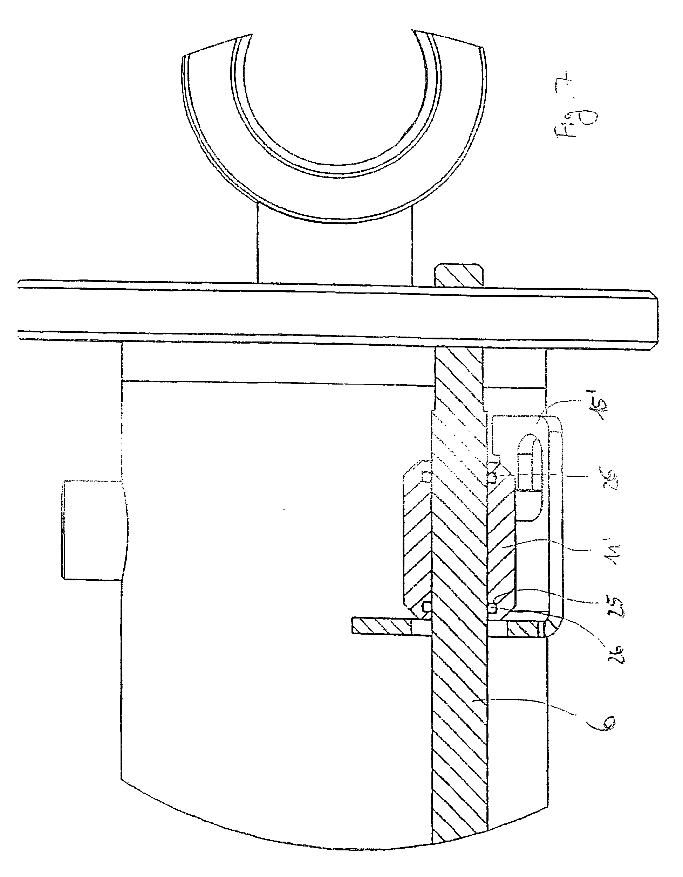

- Fig. 7: eine Schnittansicht durch die Schaltmittel der Ausführungsform gemäß Figur 5 und 6,
- Fig. 8: eine perspektivische Darstellung einer weiteren Ausführungsform der erfindungsgemäßen Schalteinrichtung und
- Fig. 9: eine perspektivische Darstellung der erfindungsgemäßen Schalteinrichtung gemäß Figur 8.

In den Figuren sind gleiche oder gleichwirkende Bauteile mit den gleichen Bezugszeichen gekennzeichnet.

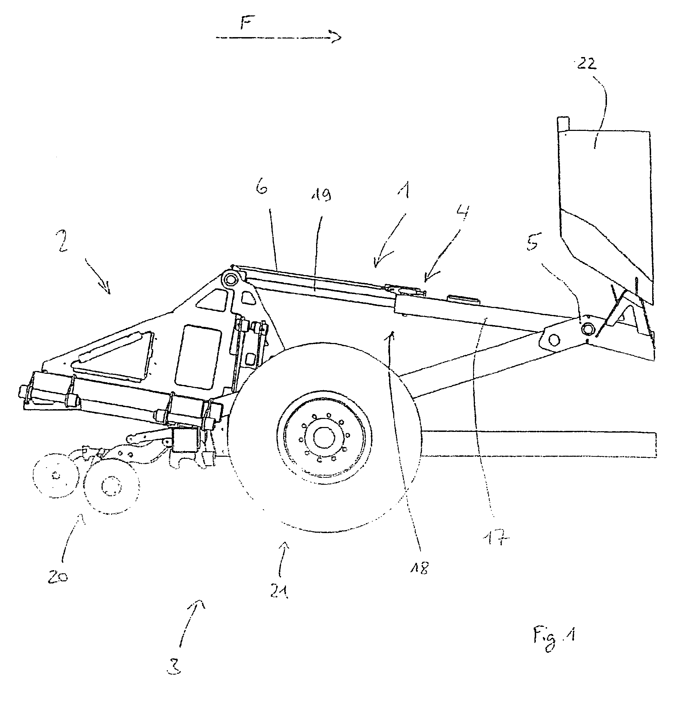

In der Figur 1 ist eine Verteilmaschine 3 zur Verteilung von in einem Vorratstank 22 bevorrateten Saatgut/Dünger über hier zur Vereinfachung nicht dargestellte Fördereinrichtung und Säschare 20 in einem Ackerboden gezeigt. Die Säschare sind Bestandteil einer Arbeitseinrichtung 2 der Verteilmaschine 3 und die Verteilmaschine 3 weist außerdem ein Fahrwerk 21 auf.

Beim Wenden der Verteilmaschine 3 am Feldrand, also auf dem Vorgewende, wird die Aussaat unterbrochen und die Arbeitseinrichtung 2 angehoben, damit eine Bearbeitung des Ackerbodens vermieden wird. Sowohl das Anheben der Arbeitseinrichtung 2 als auch das Ausstellen der Aussaat auf dem Vorgewende soll möglichst exakt am Feldrand zuverlässig erfolgen. Auf der anderen Seite soll die Aussaat während der Fahrt über den Ackerboden nicht durch eine Fehlfunktion der Schalteinrichtung 1 unterbrochen werden.

Das Ausheben der Arbeitseinrichtung 2 und damit der Säschare 20 vom Ackerboden weg erfolgt bei der in Figur 1 gezeigten Ausführung der Verteilmaschine 3 durch Rotation der Arbeitseinrichtung 2 um ein am Fahrwerk 21 angeordnetes Gelenk. Die Rotation wird durch das Ein- und Ausfahren eines hier als Hydraulikzylinder ausgebildeten Stellzylinders 18 bewirkt. Der Stellzylinder 18 ist mit seiner Kolbenstange 19 an der Arbeitseinrichtung 2 gelenkig angeschlagen, während das Zylinderrohr 17 des Stellzylinders 18 am gegenüberliegenden Ende des Stellzylinders 18 gelenkig an einem Halterahmen 5 der Verteilmaschine 3 angeschlagen ist. Am Halterahmen 5 sind außerdem der Vorratstank 22 und das Fahrwerk 21 angebracht Weiterhin ist die Verteilmaschine 3 über den Halterahmen 5 mit einem Schlepper koppelbar, der die Verteilmaschine 3 in einer Fahrtrichtung F zieht.

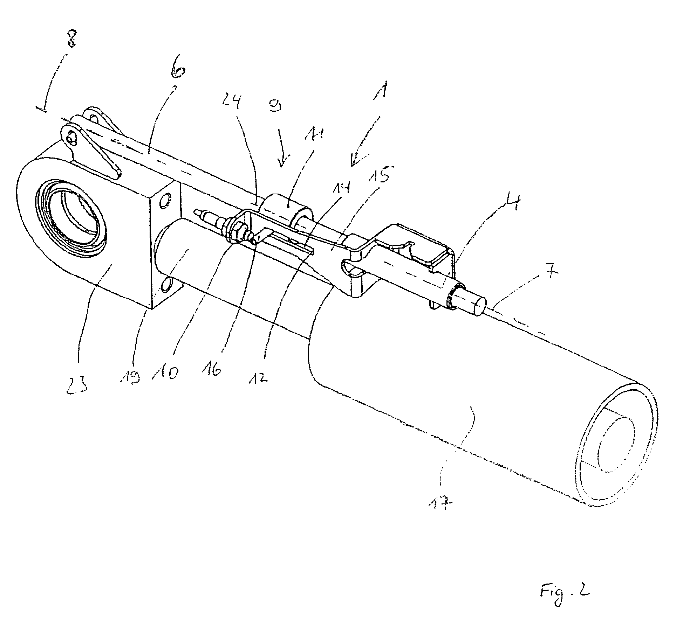

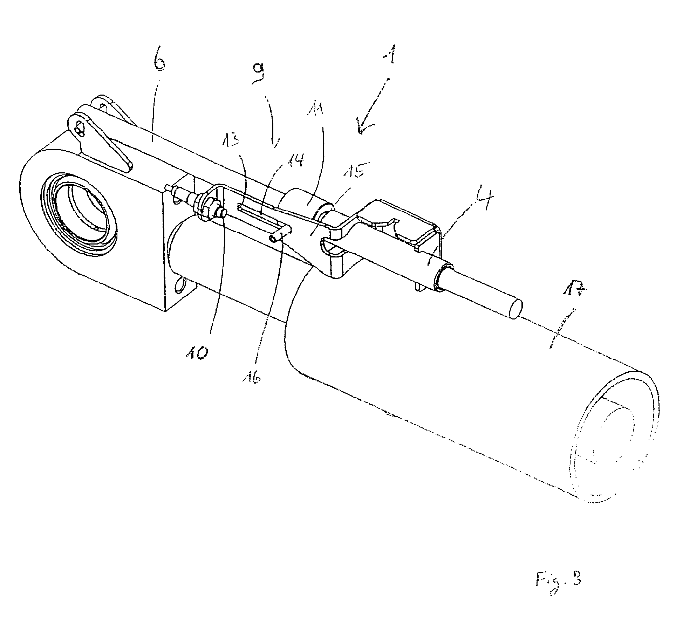

Ein Einziehen des Stellzylinders 18 bewirkt bei der in Figur 1 dargestellten Verteilmaschine 3 demnach ein Ausheben der Arbeitseinrichtung 2 von einer ersten Stellung (Fig. 2) zur Aufbringung des Saatguts/Düngers auf dem Ackerboden in eine zweite Stellung (Vorgewendestellung, Fig. 3) zum Wenden am Feldrand.

Erfindungsgemäß sind an dem Stellzylinder 18 Schaltmittel 9 in Form eines ersten Schaltglieds 4 und eines in dem ersten Schaltglied 4 verschiebbar geführten zweiten Schaltglieds 6 sowie eines Schalters 10 und einer Schalthülse 11 vorgesehen.

Anhand der Figuren 2, 3 und 4 wird die Funktion der Schaltmittel 9 beim Verstellen der Arbeitseinrichtung 2 von der in Figur 2 gezeigten ersten Stellung in die Figur 3 dargestellte zweite Stellung erläutert.

Das erste Schaltglied 4 ist über ein am Zylinderrohr 17 fixiertes Schaltblech 15 am Halterahmen 5 ohne einen translatorischen Freiheitsgrad in Richtung einer Längsachse 7 des ersten Schaltglieds 4 fixiert. Das Zylinderrohr 17 ist also nur, wie oben beschrieben, in Rotationsrichtung frei, um die Schwenkbewegung der Arbeitseinrichtung 2 beim Anheben oder Absenken zuzulassen.

Das erste Schaltglied 4 ist als Führungsrohr oder -hülse ausgebildet, an deren kreiszylindrischen Innenwand das zweite Schaltglied 6 mit Spiel gleitend geführt ist. Das zweite Schaltglied 6, hier in Form eines im Querschnitt kreiszylindrischen Stabs ist an einem zur Kopplung der Kolbenstange 19 mit der Arbeitseinrichtung 2 vorgesehenen Koppelglied 23 an der Arbeitseinrichtung 2 fixiert, und zwar ebenfalls ohne translatorischen Freiheitsgrad in Richtung einer Längsachse 8 des zweiten Schaltglieds 6. Die Längsachse 8 ist bei dem hier gezeigten Ausführungsbeispiel mit der Längsachse 7 fluchtend, da das zweite Schaltglied 6 in dem ersten Schaltglied 4 geführt ist.

Das zweite Schaltglied 6 führt demnach gegenüber dem ersten Schaltglied 4 eine mit der Bewegung der Kolbenstange 19 gegenüber dem Zylinderrohr 17 korrespondierende Bewegung aus. Die Bewegung ist außerdem proportional zu der Bewegung der Arbeitseinrichtung 2 gegenüber dem Halterahmen 5.

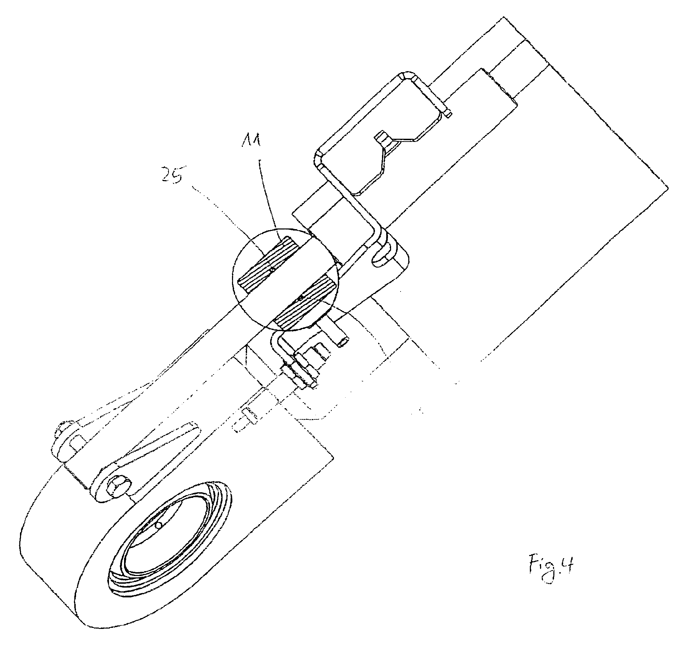

Die Schalthülse 11 ist mit ihrer Längsachse 24, die bei der in Figur 2 gezeigten Ausführungsform mit der Längsachse 7 und der Längsachse 8 zusammenfällt, entlang dem zweiten Schaltglied 6 geführt und verschiebbar. Durch eine reibschlüssige Verbindung zwischen der Schalthülse 11 und dem zweiten Schaltglied 6 nimmt das zweite Schaltglied 6 die Schalthülse 11 bei einer Bewegung des zweiten Schaltglieds 6 mit. Die reibschlüssige Verbindung besteht gemäß Figur 4 aus einem am Innenumfang der Schalthülse 11 in eine Ringnut 25 eingesetzten Reibring 26, der am Außenumfang des zweiten Schaltglieds 6 anliegt. Somit kann die entstehende Reibkraft der Reibverbindung, beispielsweise durch Vorsehen mehrerer Reibringe 26 nebeneinander, an den jeweiligen Bedarf angepasst werden. Der Reibring besteht insbesondere aus Gummi, während das zweite Schaltglied 6 insbesondere aus Metall besteht, ebenso wie die Schalthülse 11, die aber auch aus Kunststoff gefertigt sein kann.

Alternativ zu der Schalthülse 11 ist erfindungsgemäß ein Sprengring aus Kunststoff denkbar, oder eine Schalthülse gefertigt aus zwei Kunststoffschalen, die durch Schraubverbindungen am Kolben gehalten werden und wobei die Schraubkraft den Reibfaktor bestimmt.

Besonders vorteilhaft ist eine Ausgestaltung der Schaltmittel mit einer Werkstoffpaarung, die eine Reibung untereinander ausführt, aber nicht oder nur unwesentlich verschleißt/Abrieb unterliegt.

Die Bewegung der Schalthülse 11, die durch das Ein- und Ausfahren des Stellzylinders 18 bewirkt wird, wird durch einen von dem Außenumfang der Schalthülse 11 radial abstehenden Stift 16 in Zusammenwirken mit zwei Anschlägen 12, 13 eines Langlochs 14 im Schaltblech 15 begrenzt. Die durch die Reibverbindung erzeugte Reibkraft der Schalthülse 11 gegenüber dem zweiten Schaltglied 6 wird dabei überwunden.

Das Langloch 14 in dem Schaltblech 15, in welchem der Stift 16 beim Ein-und Ausfahren des Stellzylinders 18 hin und her bewegt wird, erstreckt sich parallel zur Längsachse 7, Längsachse 8 und Längsachse 24.

Die Bewegung des Stifts 16 folgt damit immer zu Beginn eines Richtungswechsels der Bewegung des Stellzylinders 18, insbesondere der Kolbenstange 19, bis der Stift am gegenüberliegenden Anschlag 12, 13 anschlägt. Damit ist am Anschlag 12 ein erster Schaltzustand bei Verstellung der Arbeitseinrichtung von der ersten Stellung in die zweite Stellung definiert, während am Anschlag 13 ein zweiter Schaltzustand des Stiftes 16 definiert ist, der bei Rückstellung von der zweiten Stellung in die erste Stellung gemäß Figur 2 vorliegt.

Durch den Schalter 10 ist der erste und der zweite Schaltzustand des Stifts 16 erfassbar, so dass unmittelbar bei Beginn einer Richtungsänderung beziehungsweise nach einem der Länge des Langlochs 14 entsprechendem Hub der Schalthülse 11 durch das zweite Schaltglied 6 ein zuverlässiges Umschalten der Verteilmaschine, insbesondere vom Säbetrieb in einen Nichtsäbetrieb, ermöglicht wird. Die Umschaltung erfolgt damit zum frühestmöglichen und optimalen Zeitpunkt, wobei auch ein zeitlich versetztes Schalten erfindungsgemäß denkbar ist. Eine Wegberechnung wie im Stand der Technik entfällt, wodurch die erfindungsgemäße Schalteinrichtung unabhängig funktioniert. Es ist sogar eine Betätigung direkt durch den Schalter 10 denkbar. Außerdem ermöglicht die Erfindung eine zuverlässige Anzeige der Schaltzustände.

Der Schalter 10 ist vorzugsweise als Induktivsensor ausgebildet und auf Grund der übereinstimmenden Translationsrichtung der beweglichen Bauteile der Schalteinrichtung 1 genügt ein einziger Schalter 10 zur Erfassung der beiden Schaltzustände der Schalteinrichtung.

Die Schalteinrichtung 1 der gemäß der vorliegenden Erfindung ist einfach montierbar und weist äußerst schnelle Reaktionszeigen auf, da extrem kurze Schaltwege ermöglicht werden. Weiterhin ist die erfindungsgemäße Schalteinrichtung unabhängig davon, wie groß der Hub des Stellzylinders im Einzelfall ist.

Bei der Ausführungsform gemäß Figur 2 bis 4 erfüllt der Stift 16 gleichzeitig die Funktion der Begrenzung der Gleitbewegung der Schalthülse 11 in Zusammenwirkung mit dem Langloch 14 beziehungsweise den Anschlägen 12, 13 sowie die Funktion der Erfassung der Bewegung der Schalthülse 11 in Zusammenwirken mit dem Schalter 10.

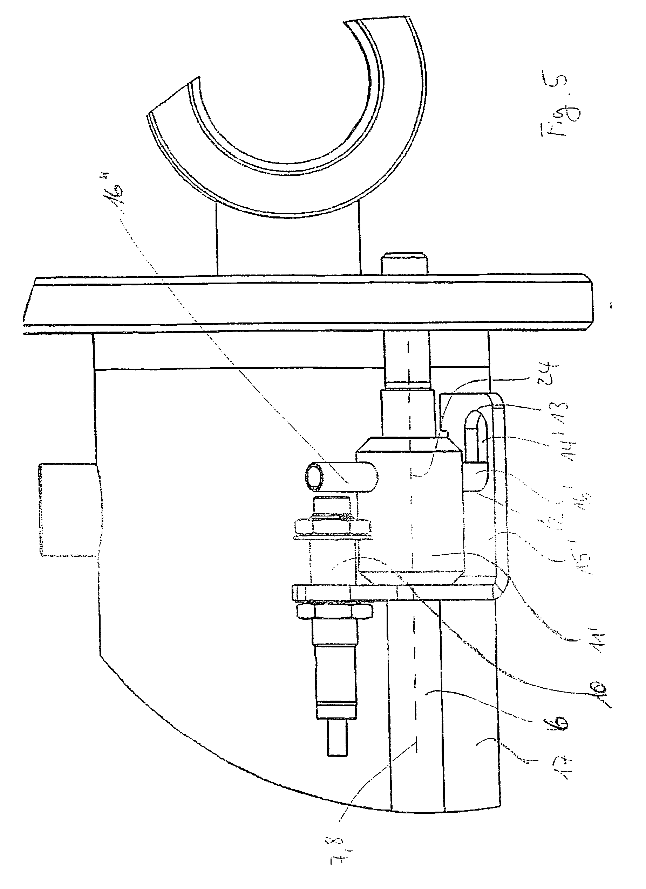

In der in Figur 5 gezeigten Ausführungsform ist dagegen ein weniger aufwendiges Schaltblech 15' vorgesehen, das ebenfalls an dem Zylinderrohr 17 fixiert ist und eine L-förmige Grundform aufweist. Der Schalter 10 ist im Gegensatz zu der Anordnung des Schalters 10 gemäß Figur 3 bis 5 um 180 Grad gedreht angeordnet. Statt wie in Figur 2 bis 4 einen einzigen Stift 16 vorzusehen, ist in der Ausführungsform gemäß Figur 5 ein Stift 16' zur Begrenzung der Bewegung der Schalthülse 11' im Langloch 14' sowie ein zweiter Stift 16" gegenüberliegend zum Stift 16' an der Schalthülse 11' angeordnet. Am zweiten Stift 16" wird vom Schalter 10 der Schaltzustand erfasst.

Das Schaltblech 15' dient, gleichzeitig als zweites Schaltglied 6, indem das erste Schaltglied 4 in einer Öffnung des Schaltblechs 15' gleitend geführt ist.

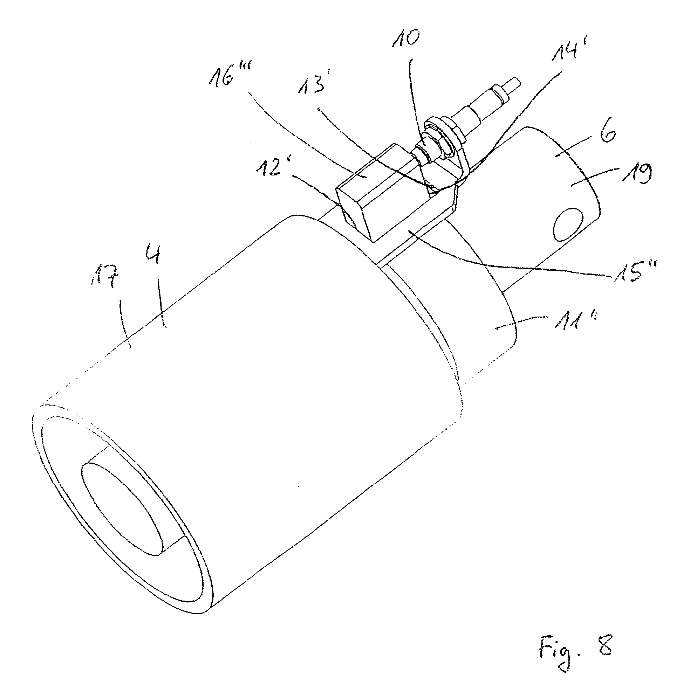

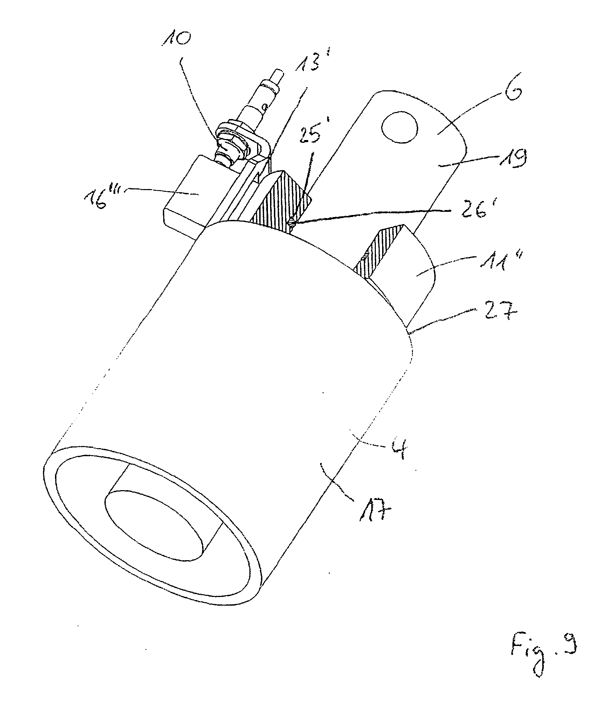

Die erfindungsgemäße Ausführung der Schalteinrichtung 1 gemäß Figuren 8 und 9 zeichnet sich dadurch aus, dass das Zylinderrohr 17 gleichzeitig als erstes Schaltglied 4 dient, während die Kolbenstange 19 gleichzeitig als zweites Schaltglied 6 vorgesehen ist. Die als Schalthülse 11" ausgebildete Gleiter ist entsprechend größer dimensioniert und wird direkt von der Kolbenstange 19 mitgenommen, indem die Schalthülse 11" die Kolbenstange 19 umschließt. In Figur 9 ist zu erkennen, dass eine Ringnut 25' und ein in der Ringnut 25' liegender Reibring 26' an der Kolbenstange 19 eine Reibverbindung bewirken.

Ein Schaltblech 15" ist an einer Stirnseite 27 des Zylinderrohrs 17 angebracht und mit einem Langloch 14' versehen, das von einem als Stift 16'" ausgebildeten Fortsatz der Schalthülse 11" durchsetzt ist.

Beim Einfahren der Kolbenstange 19 wird die Bewegung der Schalthülse 11" in Richtung der Stirnseite 27 durch einen Anschlag 12' des Langlochs 14' begrenzt, wie in Figur 8 und 9 dargestellt.

In umgekehrter Richtung, also beim Ausfahren der Kolbenstange 19 aus dem Zylinderrohr 17 wird die Schalthülse 11" durch die Reibverbindung mit der Kolbenstange 19 mitgenommen, bis der das Langloch 14' durchsetzende Stift 16'" der Schalthülse 11" am Anschlag 13' des Langlochs 14' anschlägt. Die beiden, durch die Anschläge 12', 13' definierten Schaltpositionen beziehungsweise Zustände der Schalthülse 11" sind durch den Schalter 10 erfassbar.

Die beschriebenen Schaiteinrichtungen 1 sind insbesondere verwendbar für eine Schaltung, bei der eine Verstellung eines oder mehrerer, insbesondere hintereinander geschalteter, für die Erhöhung des Schardrucks zuständiger Stellzylinder 18 zur Erhöhung des Schardrucks erfolgt, so dass der erste und zweite Schaltzustand jedes Stellzylinders 18 erfasst wird. Mit der Schaltung kann dann mittels einer Steuereinrichtung die Saatgutausbringung gesteuert werden, insbesondere durch Anschließen der Schalteinrichtung an die Steuereinrichtung des Schleppers.

### Bezugszeichenliste

- 1: Schalteinrichtung
- 2: Arbeitseinrichtung
- 3: Verteilmaschine
- 4: erstes Schaltglied
- 5: Halterahmen
- 6: zweites Schaltglied
- 7: Längsachse
- 8: Längsachse
- 9: Schaltmittel
- 10: Schalter
- 11, 11', 11": Schalthülse
- 12, 12': Anschlag
- 13, 13': Anschlag
- 14, 14': Langloch
- 15, 15', 15": Schaltblech
- 16, 16', 16", 16"': Stift
- 17: Zylinderrohr
- 18: Stellzylinder
- 19: Kolbenstange
- 20: Säschare
- 21: Fahrwerk
- 22: Vorratstank
- 23: Koppelglied
- 24: Längsachse
- 25, 25': Ringnut
- 26, 26': Reibring
- 27: Stirnseite
- F: Fahrtrichtung

## Patentansprüche

1. Schalteinrichtung (1) für eine landwirtschaftliche Verteilmaschine mit:
- einem ersten Schaltzustand bei Verstellung einer Arbeitseinrichtung (2) einer landwirtschaftlichen Verteilmaschine (3) von einer ersten Stellung in eine zweite Stellung,
- einem zweiten Schaltzustand bei Rückstellung von der zweiten Stellung in die erste Stellung,
- einem ersten Schaltglied (4) zur Fixierung an oder relativ zu einem Halterahmen (5) der Verteilmaschine (3),
- einem zweiten Schaltglied (6) zur Fixierung an oder relativ zu der Arbeitseinrichtung (2), das linear, insbesondere translatorisch, vorzugsweise mit seiner Längsachse (8) parallel zu einer Längsachse (7) des ersten Schaltglieds (4), geführt angeordnet ist und
- am ersten und/oder zweiten Schaltglied (4, 6) vorgesehenen Schaltmitteln (9) zur Erfassung des ersten und zweiten Schaltzustands,
**dadurch gekennzeichnet, dass** mit der Schalteinrichtung (1) eine durch eine Richtungsänderung der Relativbewegung des ersten Schaltglieds (4) gegenüber dem zweiten Schaltglied (6) bewirkte Betätigung der Schaltmittel (9) erfassbar ist.

2. Schalteinrichtung (1) nach Anspruch 1, bei der durch die Schaltmittel (9 mittels eines, vorzugsweise genau eines einzigen, am ersten Schaltglied (4) angebrachten Betätigungsmittels, insbesondere Schalter (10), eine Relativbewegung des ersten Schaltglieds (4) gegenüber dem zweiten Schaltglied (6) nach einer Richtungsänderung erfassbar ist.

3. Schalteinrichtung (1) nach einem der vorhergehenden Ansprüche, bei der das erste Schaltglied (4) entlang des zweiten Schaltglieds (6) durch die Schaltmittel (9), insbesondere mittels eines Gleiters, vorzugsweise einer das zweite Schaltglied (6) zumindest teilweise, insbesondere reibschlüssig, umschließenden Schalthülse (11, 11', 11"), gleitend geführt ist.

4. Schalteinrichtung (1) nach Anspruch 3, bei der durch die Schaltmittel (9), insbesondere durch das Betätigungsmittels, vorzugsweise den Schalter (10), die Relativbewegung der Schalthülse (11, 11', 11") gegenüber dem ersten Schaltglied (4) nach einer Richtungsänderung erfassbar ist.

5. Schalteinrichtung nach Anspruch 4, bei der am ersten Schaltglied (4) zwei die Bewegung der Schalthülse (11, 11', 11") mit dem zweiten Schaltglied (6) begrenzende Anschläge (12, 12', 13, 13'), insbesondere gebildet durch ein, vorzugsweise in einem Schaltblech (15, 15', 15") vorgesehenen, Langloch (14, 14'), angebracht sind.

6. Schalteinrichtung nach Anspruch 5, bei der die Schalthülse einen mit den Anschlägen (12, 12', 13, 13'), insbesondere dem Langloch (14, 14'), zusammenwirkenden Fortsatz, insbesondere in Form eines Stiftes (16, 16', 16"), aufweist.

7. Schalteinrichtung nach einem der Ansprüche 2 bis 6, bei der ein Fortsatz, insbesondere der Fortsatz gemäß Anspruch 6, zur Erfassung der Bewegung der Schalthülse (11) durch den Sensor (10) vorgesehen ist.

8. Schalteinrichtung (1) nach einem der vorhergehenden Ansprüche, bei der
- das erste Schaltglied (4) ein Zylinderrohr (17) eines Stellzylinders (18) zur Verstellung der Verteilmaschine (3) zwischen der ersten Stellung und der zweiten Stellung ist oder an diesem angebracht ist und/oder
- das zweite Schaltglied (6) eine Kolbenstange (19) des Stellzylinders (18) ist oder an dieser in Richtung der Längsachse (8) des zweiten Schaltglieds (6) ohne translatorischen Freiheitsgrad gekoppelt ist.

9. Verteilmaschine (3) mit einer ersten Stellung zur Verteilung von Saatgut/Dünger und einer zweiten Stellung zum Wenden der Verteilmaschine (3), die mindestens eine Schalteinrichtung (1) nach einem der vorhergehenden Ansprüche aufweist.

10. Verteilmaschine (3) nach Anspruch 9, bei der Schalteinrichtung (1) an der Arbeitseinrichtung (2) angeordnet ist, wobei die Arbeitseinrichtung (2) eine Sämaschine oder ein Spuranreißer ist.

## Claims

1. Switching device (1) for an agricultural distribution machine, having:
- a first switching state in the case of shifting a working device (2) of an agricultural distribution machine (3) from a first position into a second position,
- a second switching state in the case of resetting from the second position into the first position,
- a first switching member (4) for fixing on or in relation to a supporting frame (5) of the distribution machine (3),
- a second switching member (6) for fixing on or in relation to the working device (2), said second switching member (6) being arranged so as to be guided in a linear, in particular translational, manner, preferably with its longitudinal axis (8) parallel to a longitudinal axis (7) of the first switching member (4), and
- switching means (9), provided on the first and/or second switching member (4, 6), for detecting the first and second switching states,
**characterized in that** an actuation of the switching means (9) that is brought about by a change of direction in the relative movement of the first switching member (4) with respect to the second switching member (6) is detectable by way of the switching device (1).

2. Switching device (1) according to Claim 1, in which a relative movement of the first switching member (4) with respect to the second switching member (6) after a change of direction is detectable by the switching means (9) by means of a, preferably precisely one single, actuating means, in particular switch (10), fitted on the first switching member (4).

3. Switching device (1) according to either of the preceding claims, in which the first switching member (4) is guided in a sliding manner along the second switching member (6) by the switching means (9), in particular by means of a slider, preferably a switching sleeve (11, 11', 11") that encloses the second switching member (6) at least partially, in particular in a frictional manner.

4. Switching device (1) according to Claim 3, in which the relative movement of the switching sleeve (11, 11', 11") with respect to the first switching member (4) after a change of direction is detectable by the switching means (9), in particular by the actuating means, preferably the switch (10).

5. Switching device according to Claim 4, in which two stops (12, 12', 13, 13') which limit the movement of the switching sleeve (11, 11', 11'') with the second switching member (6), said stops being formed in particular by a slot (14, 14'), provided preferably in a switching plate (15, 15', 15''), are fitted on the first switching member (4).

6. Switching device according to Claim 5, in which the switching sleeve has a projection, in particular in the form of a pin (16, 16', 16''), that interacts with the stops (12, 12', 13, 13'), in particular with the slot (14, 14').

7. Switching device according to one of Claims 2 to 6, in which a projection, in particular the projection according to Claim 6, is provided for the detection of the movement of the switching sleeve (11) by the sensor (10).

8. Switching device (1) according to one of the preceding claims, in which
- the first switching member (4) is a cylindrical tube (17) of an actuating cylinder (18) for shifting the distribution machine (3) between the first position and the second position or is fitted thereon, and/or
- the second switching member (6) is a piston rod (19) of the actuating cylinder (18) or is coupled thereto in the direction of the longitudinal axis (8) of the second switching member (6) without a translatory degree of freedom.

9. Distribution machine (3) having a first position for the distribution of seed/fertilizer and a second position for turning the distribution machine (3), which has at least one switching device (1) according to one of the preceding claims.

10. Distribution machine (3) according to Claim 9, in which the switching device (1) is arranged on the working device (2), wherein the working device (2) is a seed drill or a track marker.

## Revendications

1. Dispositif de commutation (1) pour une machine de distribution agricole, comprenant :
- un premier état de commutation lors du déplacement d'un engin de travail (2) d'une machine de distribution agricole (3) depuis une première position dans une deuxième position,
- un deuxième état de commutation lors du retour de la deuxième position dans la première position,
- un premier organe de commutation (4) pour la fixation à un cadre ou par rapport à un cadre (5) de la machine de distribution (3),
- un deuxième organe de commutation (6) pour la fixation à ou par rapport à l'engin de travail (2), qui est disposé de manière guidée linéairement, notamment en translation, de préférence avec son axe longitudinal (8) parallèle à un axe longitudinal (7) du premier organe de commutation (4), et
- des moyens de commutation (9) prévus sur le premier et/ou le deuxième organe de commutation (4, 6), pour détecter le premier et le deuxième état de commutation,
**caractérisé en ce qu'**un actionnement des moyens de commutation (9) provoqué par un changement de direction du mouvement relatif du premier organe de commutation (4) par rapport au deuxième organe de commutation (6) peut être détecté avec le dispositif de commutation (1).

2. Dispositif de commutation (1) selon la revendication 1, dans lequel un mouvement relatif du premier organe de commutation (4) par rapport au deuxième organe de commutation (6) peut être détecté après un changement de direction par les moyens de commutation (9) au moyen d'un, et de préférence d'exactement un seul moyen d'actionnement, en particulier un commutateur (10), monté sur le premier organe de commutation (4).

3. Dispositif de commutation (1) selon l'une quelconque des revendications précédentes, dans lequel le premier organe de commutation (4) est guidé de manière glissante par les moyens de commutation (9) le long du deuxième organe de commutation (6), notamment au moyen d'un coulisseau, de préférence d'une douille de commutation (11, 11', 11") entourant au moins partiellement le deuxième organe de commutation (6), notamment par engagement par friction.

4. Dispositif de commutation (1) selon la revendication 3, dans lequel le mouvement relatif de la douille de commutation (11, 11', 11") par rapport au premier organe de commutation (4) peut être détecté après un changement de direction par les moyens de commutation (9), en particulier par le moyen d'actionnement, de préférence le commutateur (10).

5. Dispositif de commutation selon la revendication 4, dans lequel deux butées (12, 12', 13, 13') limitant le mouvement de la douille de commutation (11, 11', 11") avec le deuxième organe de commutation (6), en particulier formées par un trou oblong (14, 14') prévu de préférence dans une tôle de commutation (15, 15', 15"), sont montées sur le premier organe de commutation (4).

6. Dispositif de commutation selon la revendication 5, dans lequel la douille de commutation présente une saillie, notamment en forme de goupille (16, 16', 16"), coopérant avec les butées (12, 12', 13, 13'), notamment avec le trou oblong (14, 14').

7. Dispositif de commutation selon l'une quelconque des revendications 2 à 6, dans lequel une saillie, notamment la saillie selon la revendication 6, est prévue pour détecter le mouvement de la douille de commutation (11) par le capteur (10).

8. Dispositif de commutation (1) selon l'une quelconque des revendications précédentes, dans lequel :
- le premier organe de commutation (4) est un tube cylindrique (17) d'un cylindre de commande (18) pour le réglage de la machine de distribution (3) entre la première position et la deuxième position, ou est monté sur celui-ci, et/ou
- le deuxième organe de commutation (6) est une tige de piston (19) du cylindre de commande (18) ou est accouplée à celle-ci dans la direction de l'axe longitudinal (8) du deuxième organe de commutation (6) sans degré de liberté en translation.

9. Machine de distribution (3) comprenant une première position pour la distribution de semences/engrais et une deuxième position pour tourner la machine de distribution (3), laquelle présente au moins un dispositif de commutation (1) selon l'une quelconque des revendications précédentes.

10. Machine de distribution (3) selon la revendication 9, dans laquelle le dispositif de commutation (1) est disposé sur l'engin de travail (2), l'engin de travail (2) étant un semoir ou un traceur.
